# EUROPEAN PATENT APPLICATION

(11) **EP 2 490 167 A1**
(43) Date of publication of application: **22.08.2012**
(21) Application number: 12155156.8
(22) Date of filing: 13.02.2012
(51) Int. Cl.: G06Q 30/02, G06Q 30/08

(54) **System and method for an improved access to products and/or services**

(30) Priority: 16.02.2011 BE 201100102
(71) Applicant: Fifthplay NV, 9100 Sint-Niklaas (BE)
(72) Inventor: Van Daele, Kris, 2870 Puurs (BE)
(74) Representative: D'Halleweyn, Nele Veerle Trees Gertrudis

(57) **Abstract**

System for offering products and/or services of first users to second users, comprising at each first user a gateway and an output module; at each second user a gateway, a user interface for selecting products and/or services of determined first users; a back-end server adapted to provide each first user with an input interface for input of data relating to products and/or services; and to display products and/or services of determined first users in selectable manner via the user interface; and to transmit information about a product and/or service selected by a second user to the output module.

## Description

The present invention relates to a system and a method for offering products and/or services of first users, typically businesses or traders, to second users, typically end users or consumers.

EP 2 048 852 in the name of Applicant describes a Service Aggregation System with which services from multiple service providers are aggregated towards the end users. A transaction between an end user and a service provider takes place via a back-end server which executes determined commands for each end user-service provider transaction. In such a customer/back-end server architecture the back-end server provides the end users with a uniform platform for enabling, configuring, upgrading and cancelling services from different service providers.

The present invention has for its object to provide an improved system for offering products or services to end users, wherein it becomes possible to display products and/or services of different users, typically traders, of the system to an end user in a convenient and uniform manner.

An embodiment of the system according to the preamble is distinguished for this purpose in that the system comprises at each first user a gateway and an output module for output of information relating to a product and/or service ordered by a second user. At each second user, or end user, the system comprises a gateway and a user interface for selecting products and/or services of determined first users. The system further comprises a back-end server connected by means of a network, typically the internet, to the respective gateways of the second users and the first users. The back-end server is adapted to provide each first user with an input interface for input of data relating to products and/or services associated with this first user. The back-end server is also adapted to maintain a database with the input data for each first user. The back-end server is further adapted to provide each second user with a user interface which is adapted to display products and/or services of determined first users in selectable manner to a second user. The back-end server is then adapted to transmit information about a product and/or service selected by a second user to the output module of the first user associated therewith.

In this way a second user will be able to select products and/or services he/she wishes to order from first users in very simple manner via his/her user interface configured by the back-end server, after which the selection is transmitted via the back-end server to the output module of the relevant first user.

Note that the term "back-end server" may refer to one server or to a group of servers. The term "gateway" refers to a device with typical gateway functionalities, such as a microcontroller and associated hardware for providing an interface to a number of devices connected to the gateway. The gateway is typically provided with the necessary software to enable communication with devices such as for instance sensors and to control other apparatus in the home via these sensors. Other devices can of course also be further coupled to the gateway, such as for instance an output module in the form of a ticket printer, see below. Note that the gateway can be integrated into or with a modem, a set-top box, a router, etc.

According to a preferred embodiment, the user interface at each second user is provided on a touchscreen device. The back-end server is then adapted to provide a user interface adapted for display on such an device, so that a user can select products and/or services in convenient manner. The touchscreen device is preferably an "always on" device which remains permanently connected to the network. The touchscreen device can further be adapted to disable the backlight of the device after expiry of a determined period without activity.

According to a preferred embodiment, the gateway provided at a second user has a user identification known at the back-end server and associated with the geographical location of the second user. The back-end server is then preferably adapted to selectively display, as a function of the user identification, only services and/or products of determined first users via the user interface of this second user, for instance on a touchscreen device. Only the services and/or products of the first users located in the same region as the second user will typically be displayed. Only local traders for instance can in this way be displayed and a second user or end user is not inundated with information irrelevant to him/her.

It is further recommended that the gateway of a first user, typically a trader, also has a supplier identification known at the back-end server and associated with the geographical location of this first user. The back-end server is then preferably adapted to optionally display via the user interface services and/or products of the first user to a determined second user as a function of the user identification thereof and of the supplier identification of the first user. The system then preferably further comprises a database which is maintained by the back-end server and in which the respective user and supplier identifications of the gateways of the second users and first users are stored. In this way the back-end server can select for each second user only the first users whose geographical location lies within the same region as the geographical location of this second user.

According to an advantageous embodiment, the back-end server and touchscreen device are adapted to provide the user interface in the form of a web application which runs in a browser in full screen on the touchscreen of the touchscreen device. This can for instance be an HTML5 web application. In this way a very user-friendly user interface is provided which can also be easily operated by people not accustomed to working on a PC.

According to a preferred embodiment the output module of a first user, typically a trader, comprises a printer device adapted to print a ticket having thereon the information about a product and/or service selected by a second user which has been transmitted to the output module. Following ordering of a product by a second user, a ticket will in this way be printed immediately thereafter by the trader, who can then prepare the order. Note that, in accordance with the wishes of the trader, the output module can also be a web application which runs on a PC or on a touchscreen device.

According to a particularly advantageous embodiment, the gateway of a second user is equipped with a plug and play coupling for coupling one or more sensors or actuators, and the gateway is adapted to automatically configure these one or more sensors or actuators. Such a gateway can advantageously be embodied as described in more detail in European patent application EP 2 099 199 A1 in the name of Applicant, the application being included herein by way of reference.

The invention also relates to a back-end server for use in an embodiment of a system as described above and a gateway for use in an embodiment of a system as described above.

The present invention further relates to a method for offering products and/or services of first users to second users. An embodiment of the method is distinguished in that:
- an input interface is provided to each first user using a back-end server for input of data relating to products and/or services of this first user; such an input interface typically takes the form of a web application in which a second user can enter company information and information about its products and/or services, such as a code, a price, a photograph and so on;
- the back-end server maintains a database with the data entered by each first user;
- a user interface, preferably on a touchscreen device, is provided to each second user using the back-end server, which user interface is adapted to display products and/or services of determined first users in selectable manner; and
- the back-end server transmits information about a product and/or service selected by a second user to the first user.

According to an advantageous embodiment of the method, the user interface provides a web application which is run in a browser in full-screen mode on the touchscreen device.

According to a further developed embodiment of the method according to the invention, each first user and each second user transmit registration data to the back-end server and each first user and each second user are classified into a determined region by the back-end server on the basis of the registration data thereof. The user interface of a second user then preferably displays only products and/or services of a first user in the same region as that of the second user. According to a particularly advantageous embodiment, a gateway is provided at each first user and each second user which can communicate to the back-end server via the network, and registration of each first user and each second user takes place via a registration of this gateway. The back-end server can then maintain a database with the identification data of the gateways of the first and second users, associated with an address, whereby classification into a determined region is possible. According to an advantageous embodiment hereof, each first user and each second user has a gateway, and the registration data comprise an identification of the gateway.

The present invention will be further elucidated on the basis of a number of by no means limitative exemplary embodiments of the system and the method according to the invention, with reference to the accompanying drawings. In the drawing:
Figure 1A shows a schematic view of an embodiment of a system according to the invention;
Figure 1B show a block diagram of an embodiment of the installation at an end user;
Figure 1C shows a block diagram of an embodiment of the installation at a business;
Figure 2 shows a schematic representation of the touchscreen in a main menu of a user interface according to an embodiment of the invention;
Figure 3A shows a schematic representation of the touchscreen in a sub-menu "MARKET PLACE" of a user interface according to an embodiment of the invention;
figure 3B shows a schematic representation of the touchscreen in a sub-menu "CONSUMPTION" of a user interface according to an embodiment of the invention;
Figure 3C shows a schematic representation of the touchscreen in a sub-menu "MUNICIPAL SERVICES" of a user interface according to an embodiment of the invention;
Figure 4 shows a schematic representation of the touchscreen in a sub-menu "TRADER" in the sub-menu "market place" of a user interface according to an embodiment of the invention;
Figure 5 shows a schematic representation of a web browser in which an administration portal for use in the system of figures 1A-1C is shown schematically;
Figure 6 shows a schematic representation of a web browser in which a trader portal for use in the system of figures 1A-1C is shown schematically; and
Figure 7 shows a schematic representation of a web browser in which a sub-menu of the trader portal of figure 6 for use in the system of figures 1A-1C is shown schematically.

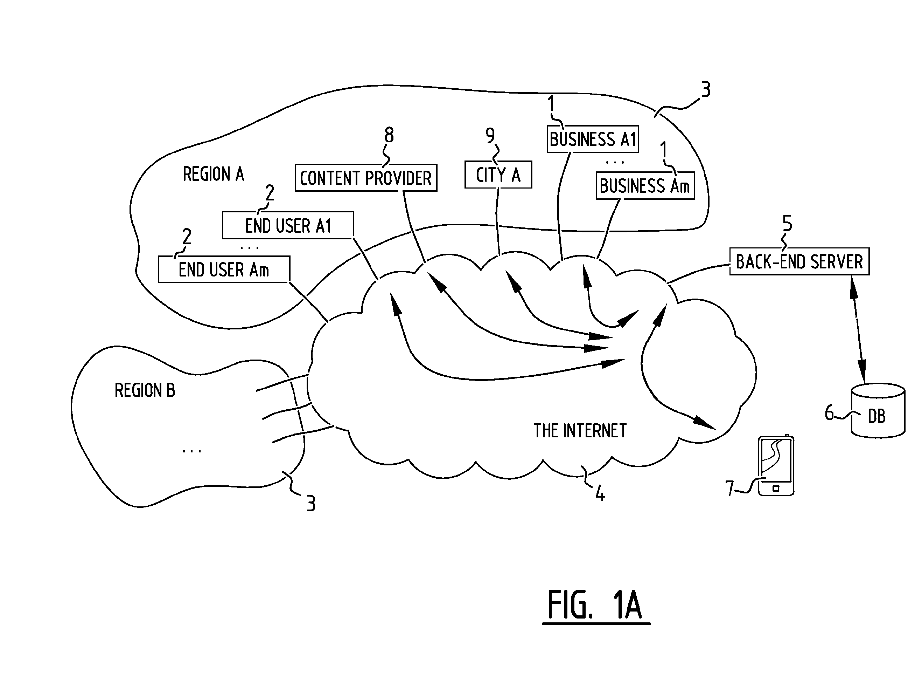

Figure 1A illustrates schematically a system according to the invention which is suitable for, among other purposes, offering products and/or services of first users or businesses 1 from a determined region 3 to second users or end users 2 from the same region 3. In the illustrated example, end users 2_{A1}-2_{An} and businesses 1_{A1}-1_{Am} are linked to a first region A. In similar manner a series of end users and businesses can be linked to another region B. Businesses 1 and end users 2 are each connected to the internet 4 and can thus communicate with one or more back-end servers 5.

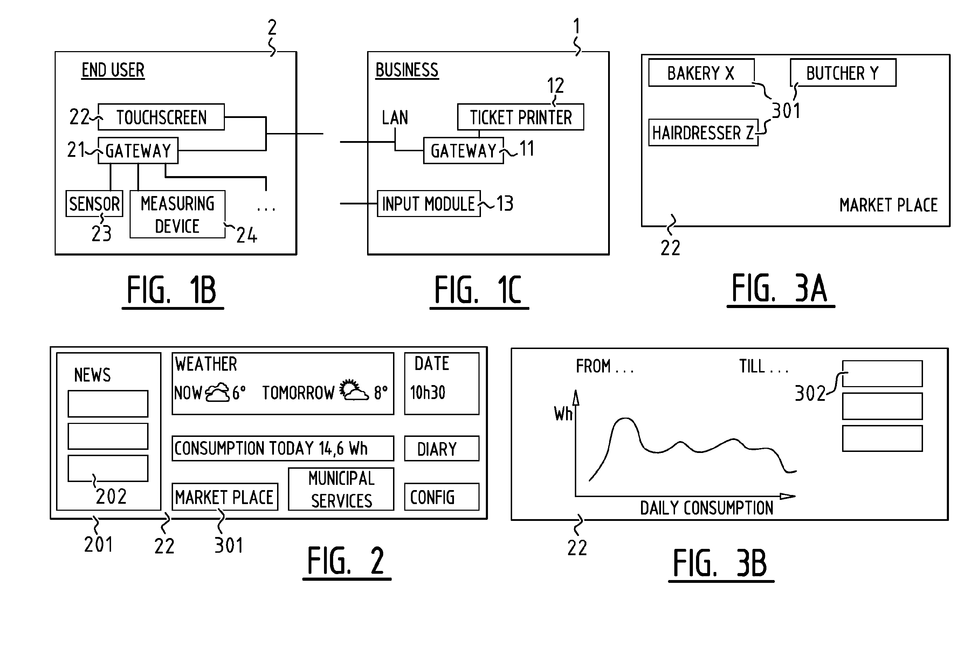

Figure 1B illustrates in detail a typical installation at an end user 2. The installation comprises a gateway 21 to which a series of sensors or actuators 23, measuring devices 24 and so on can be coupled. Further provided is a touchscreen device 22 which communicates with gateway 21 over a home network (Home Area Network, HAN). Touchscreen 22 is intended for the purpose of selecting and ordering products and/or services from businesses 1.

Figure 1C illustrates a possible installation at a business 1, also referred to above as first user. In the illustrated example a local network (Local Area Network, LAN) is installed to which a gateway 11 is connected. Gateway 11 is connected to a ticket printer 12 intended for the purpose of printing orders for products and/or services entered by an end user 2. A business 1 will further be able to input its information, products and/or services and so on via an input module 13, typically a web application.

Back-end server 5 which, as the skilled person will appreciate, can be formed by a group of back-end servers, is adapted to provide an input interface to each business 1 for input of the products and/or services to be offered, see also input module 13. Back-end server 5 maintains a database 6 with information about businesses 1 and the products and/or services associated therewith, wherein these data are typically classified per regional system 3. Back-end server 5 and touchscreen device 22 are adapted to provide an end user with an end user interface on touchscreen device 22 which is such that an end user can select and order products and/or services from determined businesses 1. These are preferably only the businesses associated with the regional system 3 in which end user 2 is located, as will be further elucidated. The user interface can for instance be provided using a web application which runs in a browser in full-screen mode. The web application can for instance be written in HTML5. Back-end server 5 can further be adapted to communicate with a mobile device 7 such as a PDA, wherein the mobile device is provided with a suitable application. Finally, back-end server 5 can process information from content providers 8, 9 in order to offer this in suitable manner to end users 2.

Gateways 21, 11 of respectively end user 2 and business 1 can for instance be a Fifthway Gateway FG4000, which is described in detail in the European patent specification EP 2 009 199 A1 in the name of Applicant. Gateway 21, 11 typically has to be registered, wherein an end user/business transmits his/her details and an identification code of the gateway, typically the serial number thereof, to back-end server 5 via an input interface provided to the end user by the back-end server. Because an end user transmits the identification code of his/her gateway to the back-end server together with his/her address, the back-end server can associate the identification code with a determined region and classify the end user in question in the correct regional system 3. For more details concerning registration of a gateway 11, 21 particular reference is made to figures 2A-2F of EP 2 009 199 A1, which figures and accompanying description are included here by way of reference. Gateway 11, 21 will preferably be further adapted to provide a plug and play coupling for a series of devices, such as sensors, measuring devices and so on. Included under the term sensors are for instance Bluetooth USB dongles, Zigbee USB dongles, WiFi USB sticks and so on. Other devices are for instance IP cameras, devices measuring the energy consumption, and so on.

For gateway 11, which is intended for placing at a business 1, it is advantageous if it can be coupled to a ticket printer 12 for printing orders. This is a very convenient solution, particularly for local shops such as a bakery or a butcher. Back-end server 5 typically has a service-oriented architecture which provides on the one hand an interface with users 1, 2 and provides on the other an interface for content providers 8, 9. For each transaction between an end user 2 and a business 1 or between a content provider 8, 9 and an end user 2 an action is required of back-end server 5 in the form of commands which are executed as part of the logic provided in back-end server 5. An administrator is typically further provided for administering the different regional systems via back-end server 5. A similar architecture is described in the European patent application EP 2 048 852 in the name of Applicant, although in this document use is not made of regional systems 3 and the back-end server and the end users are configured in a different way. The system of EP 2 048 852 further does not specifically provide for the association of determined end users 2 with determined businesses 1.

An embodiment of a user interface which can for instance be used in combination with the system of figures 1A-1C will now be described with reference to figure 2, figures 3A-3C and figure 4. Figure 2 illustrates schematically a main menu of the user interface which can be displayed on the screen of a touchscreen device 22. A number of fields 201 are typically displayed in the main menu. In the illustrated example these are a field in which news reports 202 are displayed, a field in which the weather today and tomorrow are displayed, a field displaying the date and the time, a field displaying the electricity consumption, a diary field, a market place field, a municipal services field and a configuration field. These fields can take a clickable form, such that after clicking a new screen appears in which further information on the subject of the field is shown. A field can further comprise a series of clickable sub-fields 202 which are each individually clickable and, when clicked, for instance result in a pop-up screen appearing which gives further information on the subject of sub-field 202. Sub-fields 202 for instance can thus display news headlines about which further details are given in pop-up screens which for instance show a video, photograph or other information about the news report in question.

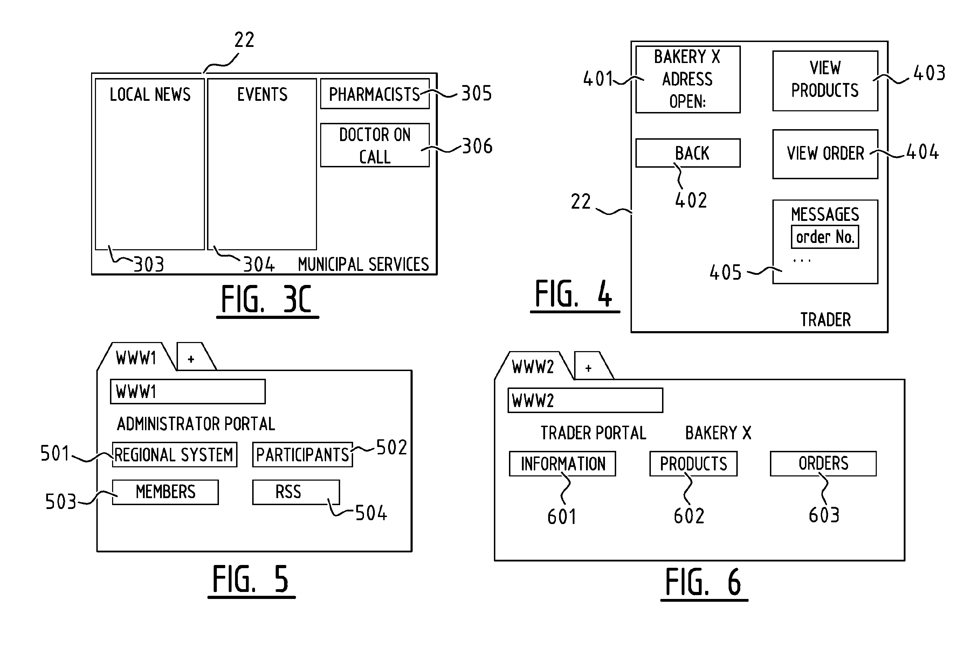

After clicking on the "MARKET PLACE" field of figure 2 a new screen appears as illustrated in figure 3A. This field allows an end user 2 to touch a business 1 from his/her region in order to select this business. In the given example these are a bakery X, a butcher Y and a hairdresser Z. In the illustrated example it is assumed that the end user touches the "BAKERY X" field, after which a new screen appears as illustrated in figure 4. A first field 401 can display details about the relevant trader, such as the address, opening hours and so on. After clicking on the "VIEW PRODUCTS" field 403 the products of the relevant trader are shown to the end user and the end user can select and order the products of his/her choice. In this menu an end user can further be given the option of indicating whether he/she wishes to collect the products in question him/herself from the trader or whether they have to be delivered. In the latter case the end user can be given the option of entering a determined delivery date and/or time. After confirming or cancelling an order it is possible to return to the screen of figure 4, where a field 404 is also provided for viewing the order and a field 405 where messages can be displayed. This field can for instance show an order number of the order or a confirmation that an order has reached the trader in good order, or that an order is ready for collection from the trader. The skilled person will appreciate that this system can further be linked to an automatic payment system which ensures that payment for confirmed orders is automatically made to the relevant trader.

A clickable field "CONSUMPTION" is further provided in the main menu represented in figure 2. As described above, gateway 21 is preferably adapted for coupling to measuring devices 24, for instance measuring devices for measuring energy consumption. Measurements of these measuring devices are then communicated via gateway 21 to back-end server 5, which processes them for display to the end user via the user interface. When a user clicks on the "CONSUMPTION" field of figure 2 a new window appears as illustrated in figure 3B. This window can for instance display the energy consumption on the basis of a graph for a determined period of time, for instance the past month. Additional fields 302 can further be provided, for instance to set a producer, transmit a measurement and so on. The skilled person will appreciate that this system can be extended further in order to also display the water consumption, gas consumption and so on to a user.

The main menu of figure 2 further comprises a "MUNICIPAL SERVICES" field. After clicking on this field a new screen can for instance appear as shown in figure 3C. This can then for instance comprise a field 303 with local news, a field 304 with local events, a clickable field 305 for displaying pharmacists on call, a clickable field 306 for displaying the doctor on call, and so on.

Figure 5 illustrates schematically a web application intended for an administrator for administrating the different regional systems 3, the participants in each regional system 3, the effective members of each participant and an RSS feed function. According to a possible embodiment a separate administrator is provided for each regional system. After clicking on the field "REGIONAL SYSTEM" 501 of figure 5 the data of the relevant regional system can be viewed and changed. These data consist for instance of the name of a city, a location code associated therewith, a language, the details of emergency services for this region, and so on. After clicking on the field "PARTICIPANTS" 502 of figure 5 all participants, being both end users 2 and businesses 1 for regional system A of figure 1A, are displayed. An administrator can further add or remove participants in such a screen. One or more members can be connected to each end user, for instance a family. In similar manner a number of members, for instance employees, can be linked to each business. The field "MEMBERS" 503 of figure 5 gives an administrator the details of the different members, for instance their name, log-in in the form of an e-mail address, and job, and allows an administrator to edit these details. After clicking on the "RSS" field 504 of figure 5 an administrator will be able to define, change or remove a set of RSS feeds for the relevant regional system. A URL typically has to be defined for each RSS feed. A default RSS feed list is further typically compiled which is available to all end users.

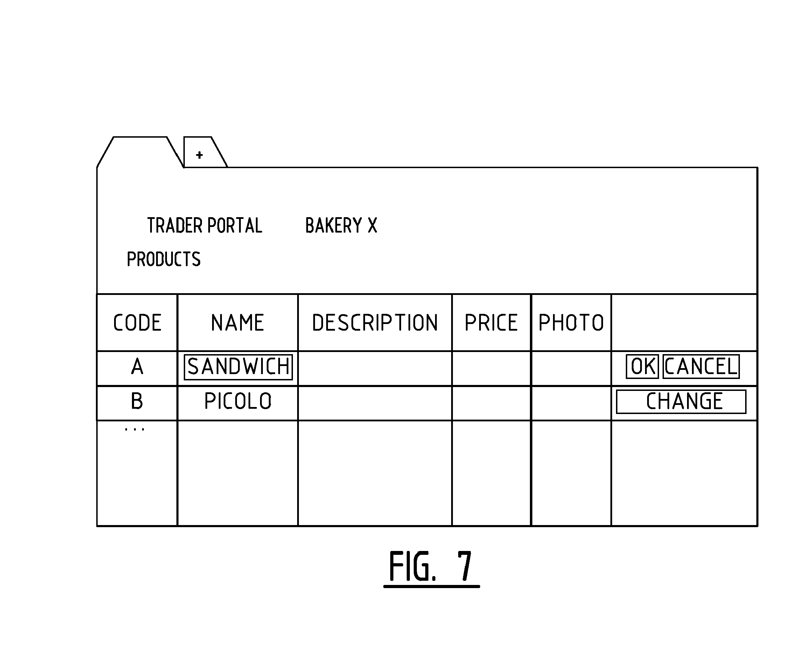

An embodiment of the input interface provided to a business will now be discussed in detail with reference to figures 6 and 7. Such an input interface is typically provided to the business in the form of a web application where a business has access to its trader portal after entering a log-in and password. Figure 6 illustrates a trader portal for bakery X. In a main menu three fields 601-603 "INFORMATION", "PRODUCTS" and "ORDERS" are displayed. The "INFORMATION" field will allow a business to for instance enter and change its details. After clicking on the field "PRODUCTS" a new screen appears as illustrated schematically in figure 7. A business can enter its products here. The information relating to a determined product can for instance consist of a code, a name, a description, the price thereof, a photograph thereof and so on. In the example illustrated in figure 7 the product "SANDWICH" has been selected, after which it is possible to complete the different information fields and confirm the input by pressing "OK". This screen will allow for instance the price of a product to be changed, a determined product to be removed, and so on. Returning to figure 6, a business can view the new and/or the finalized orders by clicking on the field "ORDERS". According to a possible embodiment, orders can here be approved, put on hold or rejected, after which an end user is notified hereof via the back-end server. The trader portal illustrated with reference to figures 6 and 7 can be displayed using a browser on a PC or via a suitable touchscreen interface. In the case a business wishes to use a ticket printing device as discussed above with reference to figure 1C, a business can activate printing of new orders via the trader portal. The printed ticket will typically comprise the following information: details of the end user, a customer reference, the order date, the delivery date, the type of delivery (collection/home delivery), and a list of the ordered goods. According to a variant (not shown) , it is possible to allow a business via the trader portal to divide its products into different categories to make it easier for an end user to find the products.

Returning to the image of figure 2, a "DIARY" field can further be provided which can be clicked in order to display a diary of the relevant end user. Appointments with a business providing services, such as a hairdresser, can for instance be automatically placed in this calendar after the appointment has been made. Depending on the settings, determined events from the news reports can further be placed automatically in this calendar.

Finally, a "CONFIG" field where the settings of an end user can be changed is provided in the main menu. This settings menu gives an end user the option of selecting determined traders from his/her region. A default setting will typically consist of displaying all traders in the region in the "MARKET PLACE" menu. The skilled person will appreciate that determined settings can also be configured here for the other menus.

The skilled person will appreciate that the present invention is not limited to the above described exemplary embodiments and that many variants and additions can be envisaged within the scope of the invention, which is defined solely by the following claims.

## Claims

1. System for offering products and/or services of first users to second users, comprising:
at each first user a gateway and an output module for output of information relating to a product and/or service selected by a second user;
at each second user a gateway, a user interface for selecting products and/or services of determined first users;
a back-end server connected by means of a network, typically the internet, to the respective gateways of the second users and the first users, which back-end server is adapted to provide each first user with an input interface for input of data relating to products and/or services and to maintain a database with the input data for each first user;
wherein the back-end server is adapted to provide the user interface of each second user, which user interface is adapted to display products and/or services of determined first users in selectable manner; and
wherein the back-end server is adapted to transmit information about a product and/or service selected by a second user to the output module of the first user associated therewith;
wherein the gateway at a second user has a user identification known at the back-end server and associated with the geographical location of the second user, and the back-end server is adapted to display via the user interface of this second user, as a function of the user identification thereof, services and/or products of determined first users in selectable manner.

2. System as claimed in claim 1, **characterized in that** the user interface at each second user is provided on a touchscreen device.

3. System as claimed in claim 1 or 2, **characterized in that** the output module is connected to the gateway and that the back-end server is adapted to transmit information about a product and/or service selected by a second user via the gateway of the first user associated therewith to the output module thereof.

4. System as claimed in claim 1, **characterized in that** the gateway of a first user has a supplier identification known at the back-end server and associated with the geographical location of this first user, and that the back-end server is adapted to optionally display to a determined second user, as a function of the user identification thereof and of the supplier identification of this first user, services and/or products thereof via the user interface.

5. System as claimed in claim 4, **characterized in that** the system comprises a database which is accessible to the back-end server and in which the respective user and supplier identifications of the gateways of the second users and first users are stored such that the back-end server can select for each second user only the first users whose geographical location lies within the same region as the geographical location of this second user.

6. System as claimed in any of the foregoing claims, **characterized in that** the back-end server is adapted to provide the user interface in the form of a web application which runs in a browser in full-screen on a touchscreen device; and/or that the input interface is a web application.

7. System as claimed in any of the foregoing claims, **characterized in that** the output module of a first user comprises a printer device adapted to print a ticket having thereon the information about a product and/or service selected by a second user which has been transmitted to the output module.

8. System as claimed in any of the foregoing claims, **characterized in that** the or each gateway of a second user is equipped with a plug and play coupling for coupling at least one sensor or actuator to this gateway and is adapted to configure the sensor or actuator.

9. System as claimed in any of the foregoing claims, **characterized in that** the gateway is integrated into or with a set-top box, a modem, a router.

10. Back-end server for use in a system as claimed in any of the foregoing claims, intended for connection by means of a network, typically the internet, to the respective gateways of the first and second users, wherein the gateway of a second user has a user identification, which back-end server is adapted
- to provide an input interface to each first user for input of data relating to products and/or services and to maintain a database with the data entered for each first user;
- to provide the user interface of each second user, which user interface is adapted to display products and/or services of determined first users in selectable manner; and
- to transmit information about a product and/or service selected by a second user to the output module of the first user associated therewith;
wherein the back-end server is adapted to display products and/or services of determined first users in selectable manner via the interface of the second user as a function of the user identification thereof.

11. Back-end server as claimed in claim 10, **characterized in that** the gateway of a first user has a supplier identification known at the back-end server and associated with the geographical location of this first user, and that the back-end server is adapted to optionally display to a determined second user, as a function of the user identification thereof and of the supplier identification of this first user, services and/or products thereof via the user interface.

12. Method for offering products and/or services of first users to second users, wherein a second user has a gateway with a user identification, comprising of:
providing an input interface to each first user using a back-end server via a network, typically the internet, for input of data relating to products and/or services;
maintaining a database with the data entered by each first user;
each second user transmitting to the back-end server the user identification of the gateway of the second user;
providing a user interface to each second user using the back-end server, which user interface is adapted to display, as a function of the user identification of the gateway of the second user, products and/or services of determined first users in selectable manner; which user interface is preferably provided on a touchscreen device; and
the back-end server transmitting information about a product and/or service selected by a second user to the first user.

13. Method as claimed in claim 12, **characterized in that** the input interface provided to a first user is a web application in which a first user can enter, among other information, company information and information relating to its products and/or services, such as a code, a name, a price, a photograph and so on, wherein the entered data are maintained in a database by the back-end server.

14. Method as claimed in any of the claims 12-13, **characterized in that** the user interface provided to a second user is a web application, and that this web application is run in a browser in full-screen mode on a touchscreen device of the second user.

15. Method as claimed in any of the claims 12-14, **characterized in that** each first user transmits registration data to the back-end server, that each first user is classified into a determined region by the back-end server on the basis of the registration data thereof, and that the user interface of a second user displays only products and/or services of a first user in the same region as that of the second user, wherein each first user preferably has a gateway and the registration data preferably comprise an identification of the gateway.
